Europäisches Patentamt

European Patent Office

Office européen des brevets

(19)

(11) Veröffentlichungsnummer: **0 071 628**
**B1**

(12) **EUROPÄISCHE PATENTSCHRIFT**

(45) Veröffentlichungstag der Patentschrift:
29.05.85

(51) Int. Cl.⁴: **B 23 D 25/04**

(21) Anmeldenummer: **82900624.6**

(22) Anmeldetag: **16.02.82**

(86) Internationale Anmeldenummer:
**PCT/DE 82/00032**

(87) Internationale Veröffentlichungsnummer:
**WO 82/02846 (02.09.82 Gazette 82/21)**

(54) **TRENNVORRICHTUNG.**

(30) Priorität: **17.02.81 DE 3105780**

(43) Veröffentlichungstag der Anmeldung:
**16.02.83 Patentblatt 83/7**

(45) Bekanntmachung des Hinweises auf die Patenterteilung:
**29.05.85 Patentblatt 85/22**

(84) Benannte Vertragsstaaten:
**FR GB SE**

(56) Entgegenhaltungen:
**DE - A - 1 752 861**
**DE - A - 2 204 566**
**DE - C - 690 926**
**FR - A - 1 196 498**
**FR - A - 1 503 748**
**GB - A - 572 217**
**US - A - 3 377 900**

(73) Patentinhaber: **UEHLIN, Jürgen, Oberdorfstrasse 4,
D-7860 Schopfheim (DE)**

(72) Erfinder: **UEHLIN, Jürgen, Oberdorfstrasse 4,
D-7860 Schopfheim (DE)**

(74) Vertreter: **Rackette, Karl, Dipl.-Phys. Dr.-Ing,
Kaiser-Joseph-Strasse 179 Postfach 1310,
D-7800 Freiburg (DE)**

## Beschreibung

Die Erfindung betrifft eine Trennvorrichtung für im Pilgerschritt vorgeschobene und gedrehte Rohre mit einer Rohrklemmeinrichtung sowie einer durch die Bewegung der Rohrklemmeinrichtung gesteuerten, axial verfahrbaren, ein Abtrennwerkzeug tragenden Einrichtung.

Eine solche Trennvorrichtung zum Ablängen von Pilgerrohren ist aus der DE-OS 2 824 236 bekannt. Wegen der absatzweisen Beschleunigung und Verzögerung bei im Pilgerschritt vorgeschobenen und gedrehten Rohren, ist die bekannte Trennvorrichtung so ausgelegt, daß sie zu bewegenden Massen klein sind. Die Rohrklemmeinrichtung besteht aus einer drehbaren Spannpatrone, die von einer ebenfalls drehbaren und axial verstellbaren Spannhülse verstellbar ist. Auf diese Weise werden nur die für das Festspannen und für das Trennen des Rohres erforderlichen Elemente und Teile der Trennvorrichtung in einem Maße bewegbar gestaltet, daß sie der Vorschub-Drehbewegung des Rohres folgen können. Jedoch ist es mit der bekannten Trennvorrichtung nicht möglich, Beschädigungen und Verformungen des abzulängenden Rohres zu vermeiden.

Der Erfindung liegt daher die Aufgabe zugrunde, eine mitlaufende Trennvorrichtung der eingangs genannten Art zu schaffen, bei der der Walzvorgang weitgehend unbeeinflußt bleibt und das Rohr beim Trennen nicht verformt wird.

Diese Aufgabe wird erfindungsgemäß dadurch gelöst, daß die Rohrklemmeinrichtung ein mit seinem Rand in das Rohr eindrückbares Klemmteil aufweist, das gegenüber dem Trennelement des Abtrennwerkzeuges fluchtend angeordnet ist, so daß die Spur des Klemmteils entlang dem Umfang des Rohres durch das Trennelement ausschneidbar ist.

Durch die erfindungsgemäße Anordnung läßt sich eine formschlüssige Klemmung erzielen, bei der zunächst die Oberfläche des Rohres beschädigt wird. Durch die besondere Anordnung des Trennelementes wird jedoch eine Trennung dort durchgeführt, wo die Oberfläche des Rohres verformt ist, so daß der verformte Teil des Rohres durch den Trennvorgang beseitigt wird.

Zweckmäßige Weiterbildungen der Erfindung sind in den Unteransprüchen gekennzeichnet.

In der Zeichnung sind Ausführungsbeispiele des Gegenstandes der Erfindung dargestellt. Es zeigen

Fig. 1 eine Trennvorrichtung gemäß der Erfindung schematisch in einer Ansicht,

Fig. 2 + 3 den Satellitenschlitten der Trennvorrichtung gemäß einem ersten Ausführungsbeispiel,

Fig. 4 + 5 ein weiteres Ausführungsbeispiel für einen Satellitenschlitten,

Fig. 6 – 9 eine Veranschaulichung des Klemm- und Trennvorganges mit Hilfe der erfindungsgemäßen Trennvorrichtung und

Fig. 10 ein weiteres Ausführungsbeispiel der erfindungsgemäßen Trennvorrichtung.

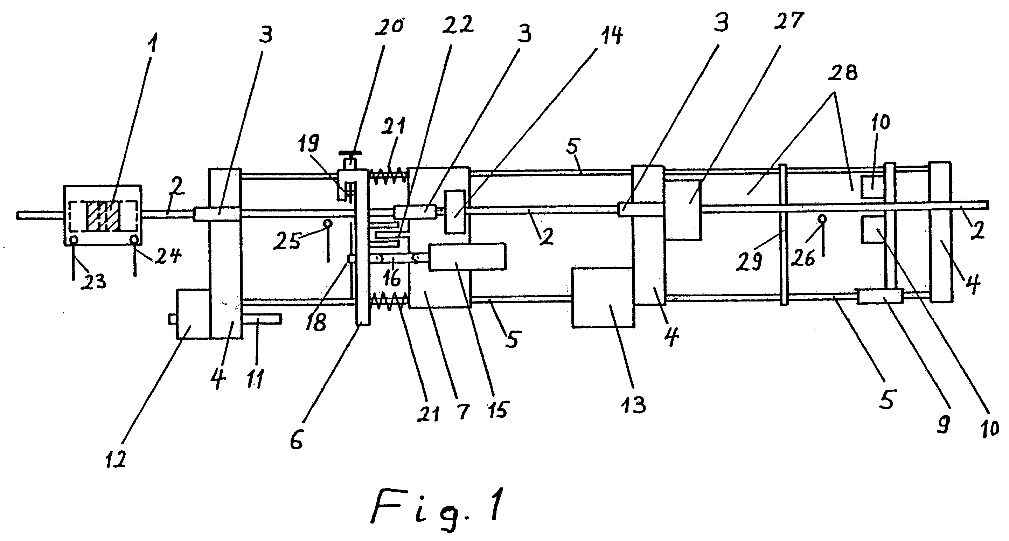

In Fig. 1 erkennt man ein schematisch dargestelltes Walzgerüst 1 sowie ein Fertigrohr 2, das sich in axialer Richtung durch mehrere Rohrführungen 3 der erfindungsgemäßen Trennvorrichtung erstreckt. Die Trennvorrichtung weist zwei von einem Maschinenuntergestell 4 getragene Führungsrohre 5 auf, auf denen ein Satellitenschlitten 6, ein Hauptschlitten 7 und ein Meßschlitten mit Hilfe von Kugelführungsbüchsen verfahrbar angeordnet sind.

Der Meßschlitten 8 ist mit Hilfe eines Meßschlittenantriebes 9 verstellbar und verfügt über einen Meßkopf 10, mit dessen Hilfe die Position des Endes des Rohres 2 feststellbar ist. Die relative Lage des Endes des Rohres 2 wird vom Meßkopf 10 in ein Signal verwandelt, das zum Verstellen eines Positionierstiftes 11 dient. Die Verstellung des Positionierstiftes 11 erfolgt über einen Verstellmotor 12.

Der Hauptschlitten 7 wird mit Hilfe eines Hauptschlittenantriebs 13 verfahren. Auf dem Hauptschlitten 7 ist in der Nähe der Rohrführung 3 eine Dreheinrichtung 14 angeordnet, mit deren Hilfe das Fertigrohr 2 gedreht werden kann, wenn es das Kaltpilgerwalzwerk verlassen hat und daher von diesem nicht mehr gedreht werden kann.

Auf dem Hauptschlitten 7 ist weiterhin ein Motor 15 angeordnet, der über eine Kugelschiebewelle 16 mit Kreuzgelenken ein Trennelement 18, beispielsweise ein Sägeblatt, antreibt.

Das Trennelement 18 ist auf dem Satellitenschlitten 6 angeordnet und gegenüber diesem in radialer Richtung verstellbar. Ebenfalls radial verstellbar ist auf dem Satellitenschlitten eine Klemmrolle 19 angeordnet, deren Ruhestellung mit Hilfe einer Einstellvorrichtung 20 entsprechend dem Durchmesser des Fertigrohres 2 einstellbar ist.

Der Satellitenschlitten 6 ist über zwei Federn 21 mit dem Hauptschlitten 7 verbunden. Der Abstand zwischen dem Satellitenschlitten 6 und dem Hauptschlitten 7 wird mit Hilfe einer Abstandsmeßvorrichtung 22 erfaßt, die es gestattet, den Hauptschlittenantrieb 13 so zu steuern, daß der Abstand zwischen dem Satellitenschlitten 6 und dem Hauptschlitten 7 konstant bleibt.

Näherungsschalter 23 und 24 am Walzgerüst 1 speisen eine in der Zeichnung nicht dargestellte Steuereinrichtung mit Positionssignalen des Walzgerüstes. Weitere Näherungsschalter 25 und 26 erfassen die Anwesenheit des Fertigrohres 2 und senden entsprechende Signale zu der nicht dargestellten Steuereinrichtung.

Eine Auslauftransporteinrichtung 27 gestattet es, ein abgeschnittenes Fertigrohr 2 bis zu einer Auslaufbahn 28 mit einem Träger 29 zu befördern.

Die oben beschriebene Anordnung arbeitet wie folgt: Beim Kaltpilgerwalzen wird die Rohrluppe über einen festliegenden Dorn gestreckt, indem sich zwei kalibrierte Walzen, die Luppe von oben und unten erfassend, in gleichmäßigem Takt auf ihr hin und her abwälzen. Die Walzen erhalten ihre Bewegung vom Walzgerüst, in dem sie gelagert sind. Nach der Vorwärts- und Rückwärtsbewegung der Walzen geben diese die Rohrluppe frei. In diesem Zeitraum wird die Rohrluppe um einen bestimmten Vorschubbetrag vorgeschoben. Gleichzeitig mit dem Vorschieben wird die Rohrluppe um einen bestimmten Winkel gedreht, um bei der Ausstreckung bis zum Fertigrohr 2 einen genau kreisförmigen Querschnitt zu erhalten. In der Ausgangsstellung der Trennvorrichtung befindet sich der Satellitenschlitten 6 in Anlage gegen den Positionierstift 11. Der Meßschlitten befindet sich in einem der gewünschten Abtrennlänge entsprechenden Abstand. Das Fertigrohr 2 wird im Pilgerschritt mit Drehbewegungen durch die Rohrführungen 3, die Dreheinrichtung 14 und die Auslauftransporteinrichtung 27 vorbei an den Näherungsschaltern 25 und 26 bis in den Bereich der Meßköpfe 10 des Meßschlittens vorgeschoben, wobei das Walzgerüst je nach seiner Endlage den Näherungsschalter 23 bzw. 24 betätigt. Wenn das Walzgerüst unter Betätigen des Näherungsschalters 24 seine hintere Endlage erreicht hat und das vordere Ende des Fertigrohres 2 in den Erfassungsbereich der Meßköpfe 10 eintaucht, wird der Positionierstift 11 mit Hilfe des Verstellmotors 12 und des Ausgangssignals der Meßköpfe 10 entsprechend der Eintauchtiefe des Fertigrohres 2 in den Bereich der Meßköpfe 10 ausgefahren. Dadurch wird eine Synchronisierung bzw. ein Referenzpunkt für die gewünschte Abschnittlänge geschaffen. Je weiter das Fertigrohr 2 in den Bereich der Meßköpfe 10 eintaucht, umso weiter wird der Positionierstift 11 und damit der das Trennelement 18 tragende Satellitenschlitten 6 verschoben. Auf diese Weise ist der Abstand des Trennelementes 18 vom Ende des Fertigrohres 2 unabhängig von der zufälligen Länge des Endes des Fertigrohrs 2 zum Zeitpunkt, zu dem der Näherungsschalter 24 anspricht.

Wenn nach frühestens 150 Millisekunden die Walzen des Walzgerüstes 1 ihre vordere Endlage erreichen und der Näherungsschalter 23 betätigt wird, verursacht das Ausgangssignal des Näherungsschalters 23 ein radiales Verschieben der Klemmrolle 19, so daß der Satellitenschlitten 6 mit dem Fertigrohr 2 gekoppelt wird. Aufgrund dieser Kopplung folgt der Satellitenschlitten 6 nunmehr der axialen Bewegung des Fertigrohres 2. Gleichzeitig wird der Hauptschlitten 7 mit Hilfe des Signals der Abstandsmeßvorrichtung 22 und des Hauptschlittenantriebs 13 in einem mittleren konstanten Abstand gehalten. Die ruckartige Vorschubbewegung des Fertigrohrs 2 wird über die Kugelschiebewelle 16 und die Feder 21 aufgegangen. Da der Satellitenschlitten 6 im Verhältnis zum Hauptschlitten 7 nur eine verhältnismäßig kleine Masse besitzt, werden die Einflüsse auf die Bewegung des Fertigrohrs 2 klein gehalten.

Während der Satellitenschlitten 6 und der Hauptschlitten 7 der Bewegung des Fertigrohrs 2 folgen, wird dieser mit Hilfe des Trennelementes 18 geteilt. Anschließend wird die Auslauftransporteinrichtung 27 betätigt, um das Fertigrohr 2 zur Auslaufbahn 28 zu befördern. Der Satellitenschlitten 6 sowie der Hauptschlitten 7 fahren dann wieder in ihre Ausgangsposition zurück, in der der Satellitenschlitten 6 gegen den Positionierstift 11 anliegt.

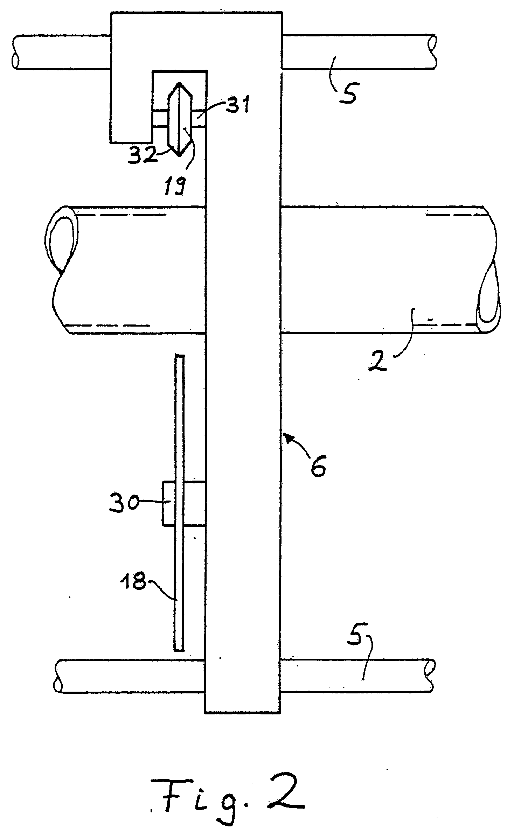

Die Ausbildung des Satellitenschlittens 6 ist in Fig. 2 vergrößert dargestellt. Das Trennelement 18 ist auf einer Welle 30 angeordnet, die quer zur Rohrachse verschiebbar ist. Auch die Welle 31 der Klemmrolle 19 ist quer zur Längsachse des Fertigrohrs 2 verschiebbar. Man erkennt deutlich die Schneide 32 der Klemmrolle 19.

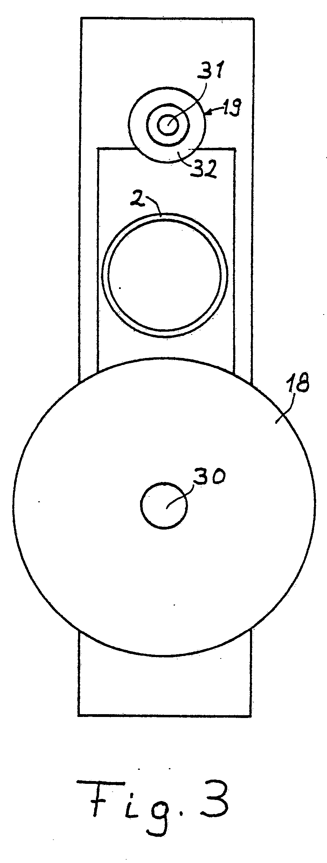

Fig. 3 zeigt einen Schnitt durch den Satellitenschlitten 6.

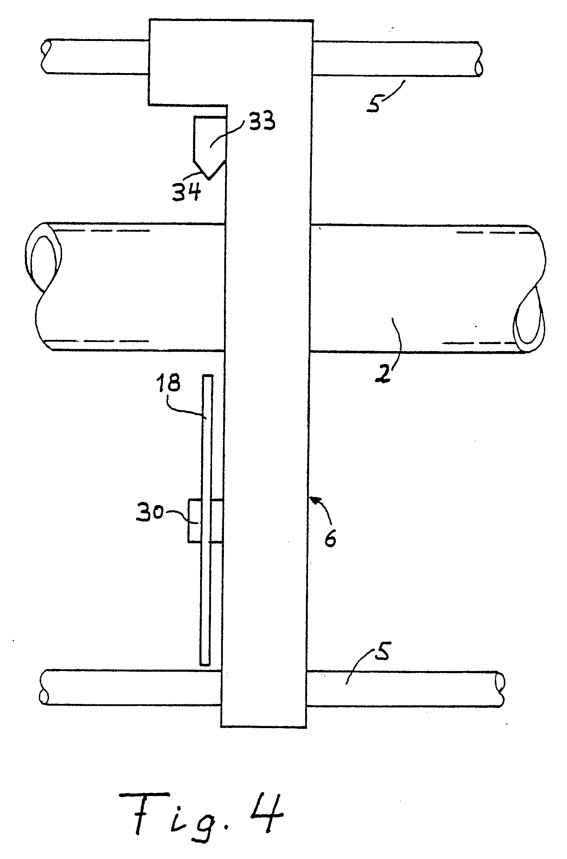

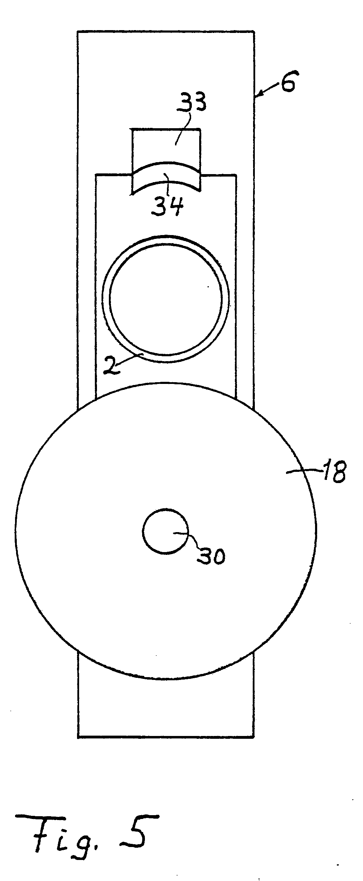

In Fig. 4 ist ein Satellitenschlitten 6 dargestellt, bei dem statt einer Klemmrolle ein Klemmstück 33 verwendet wird, dessen Form in Fig. 5 deutlicher erkennbar ist. Die Schneide 34 des Klemmstücks 33 ist konkav ausgebildet und dem Durchmesser des Fertigrohres 2 angepaßt.

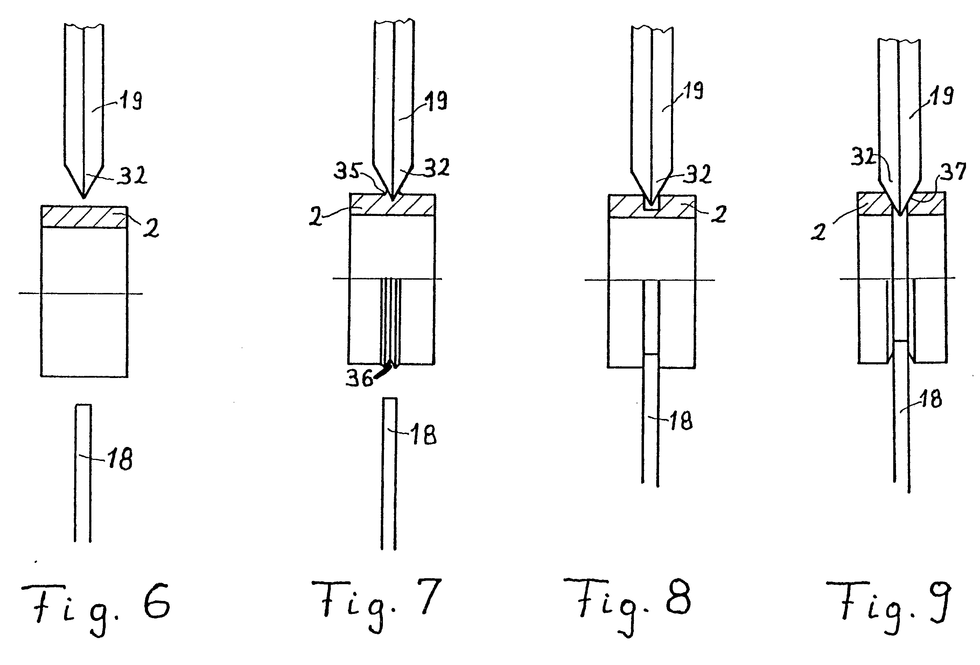

Die Fig. 6 bis 9 veranschaulichen den Klemm- und Trennvorgang. Die Stellung der Klemmrolle 19 und des Trennelementes 18 in Fig. 6 entspricht im wesentlichen der in den Fig. 2 und 3 gezeigten Ruhestellung. In Fig. 7 ist die Klemmrolle 19 form- und kraftschlüssig mit dem Rohr 2 unter Bildung einer Verwerfung 35 gekoppelt. Die durch die Drehung des Fertigrohres 2 durch die Klemmrolle 19 erzeugte Spur 36 ist ebenfalls dargestellt.

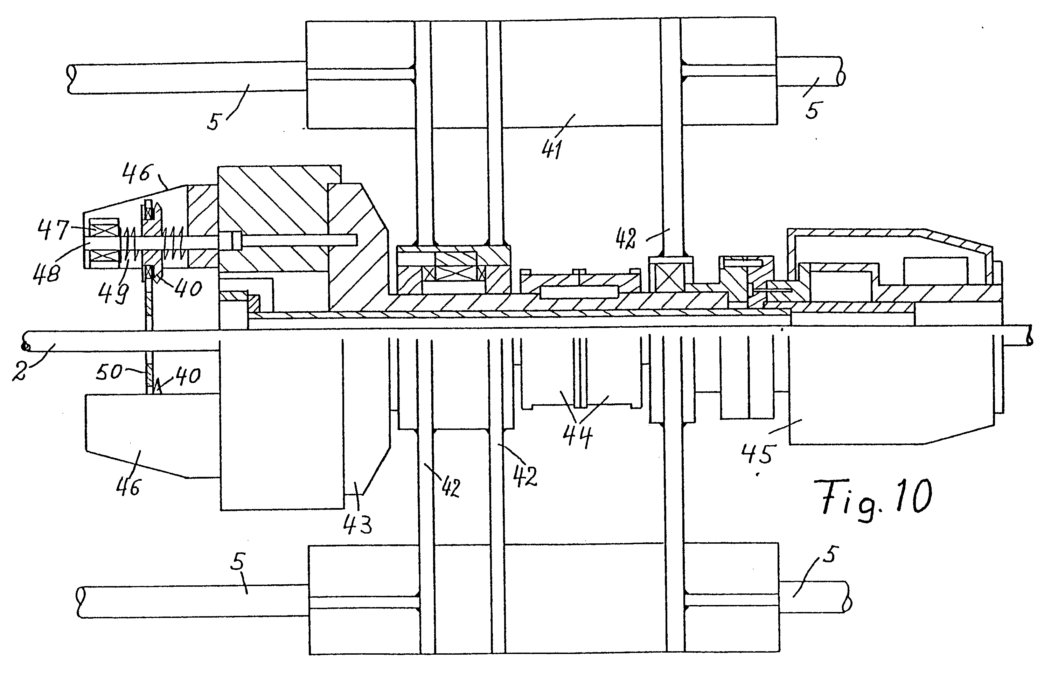

Fig. 8 zeigt, wie das Trennelement 18 die Verwerfung 35 ausschneidet. In Fig. 9 ist zu erkennen, wie die Klemmrolle 19 ein Einklemmen des Trennelementes 18 verhindert und gleichzeitig eine Fase 37 andrückt.

Selbstverständlich können als Trennelement 18 beliebige verschiedene Vorrichtungen, wie beispielsweise ein Sägeblatt, eine Trennscheibe, eine Bandsäge usw. vorgesehen werden.

Ein weiteres Ausführungsbeispiel der Erfindung ist in Fig. 10 dargestellt. Bei diesem Ausführungsbeispiel dienen mehrere Kreismesser 40 gleichzeitig als Klemmelement und als Trennelement. Auf den Führungsrohren 5 sind zwei Schlitten 41 angeordnet, an denen mittels Träger 42 ein fahrbarer Spindelstock 43 befestigt ist. Der Spindelstock 43 verfügt über Antriebsräder 44 und einen hydraulischen Spannzylinder 45. Die Backen 46 sind über in der Zeichnung nicht dargestellte Winkelhebel radial verschiebbar. Jede Backe 46 verfügt über eine in einem Lager 47 drehbar gelagerte Welle 48, auf der ein Kreismesser 40 axial verschiebbar angeordnet ist. Die Kreismesser 40, vorzugsweise drei Kreismesser 40, werden mit Hilfe von Federn 49 in eine Mittellage positioniert. Eine Abstandsmeßvorrichtung, die in der Zeichnung nicht dargestellt ist, erfaßt die axiale Stellung der Kreismesser 40 und steuert die axiale Vorschubbewegung des Spindelstocks 43 entsprechend der Vorschubbewegung des Fertigrohres 2.

Durch die erfindungsgemäße Klemmung mit Hilfe der Klemmrolle 19, des Klemmstückes 33 oder der Kreismesser 40 wird eine sichere Verbindung zwischen dem Satellitenschlitten 6 und dem Fertigrohr 2 bzw. zwischen dem Fertigrohr 2 und der Verbindungsplatte 50 der Kreismesser 40 erreicht. Dadurch, daß das Fertigrohr 2 dort getrennt wird, wo die Klemmung erfolgt, ist ein Ablängen des Fertigrohres 2 ohne Druckstellen möglich, die von der Klemmeinrichtung verursacht werden.

**Patentansprüche**

1. Trennvorrichtung für im Pilgerschritt vorgeschobene und gedrehte Rohre (2) mit einer Rohrklemmeinrichtung sowie einer durch die Bewegung der Rohrklemmeinrichtung gesteuerten, axial verfahrbaren, ein Abtrennwerkzeug tragenden Einrichtung, dadurch gekennzeichnet, daß die Rohrklemmeinrichtung (6) ein mit seinem Rand (32, 34) in das Rohr (2) eindrückbares Klemmteil (19, 33, 40) aufweist, das gegenüber dem Trennelement (18) des Abtrennwerkzeuges fluchtend angeordnet ist, so daß die Spur (36) des Klemmteiles (19, 33, 40) entlang dem Umfang des Rohres (2) durch das Trennelement (18) ausschneidbar ist.

2. Trennvorrichtung nach Anspruch 1, dadurch gekennzeichnet, daß das Klemmteil (19, 33, 40) und das Trennelement (18) radial verschiebbar sind.

3. Trennvorrichtung nach Anspruch 1 oder 2, dadurch gekennzeichnet, daß das Klemmteil eine drehbare Klemmrolle (19) mit einer entlang ihrem Umfang ausgebildeten Schneide (32) ist.

4. Trennvorrichtung nach Anspruch 1 oder 2, dadurch gekennzeichnet, daß das Klemmteil ein Klemmstück (33) mit einer zum Rohr (2) weisenden konkaven Schneide (34) ist.

5. Trennvorrichtung nach Anspruch 1 oder 2, dadurch gekennzeichnet, daß das Klemmteil und das Trennelement an den radial verstellbaren Backen (46) eines axial verfahrbaren Spindelstockes (43) angeordnete Kreismesser (40) sind.

6. Trennvorrichtung nach Anspruch 5, dadurch gekennzeichnet, daß die Kreismesser (40) gegenüber den Backen (46) federnd axial verschiebbar angeordnet sind.

7. Trennvorrichtung nach Anspruch 6, dadurch gekennzeichnet, daß die Abweichung der Stellung der Kreismesser (40) von ihren axialen Ruhelagen mit Hilfe einer Abstandsmeßvorrichtung feststellbar ist, über die der axiale Vorschub des Spindelstockes (43) steuerbar ist.

8. Trennvorrichtung nach einem der Ansprüche 1 bis 4, dadurch gekennzeichnet, daß die Rohrklemmeinrichtung (19, 33) und das Trennelement (18) auf einem Satellitenschlitten (6) angeordnet sind, der gegenüber einem den Motor (15) der Trennvorrichtung tragenden Hauptschlitten (7) axial federnd abgestützt ist.

9. Trennvorrichtung nach Anspruch 8, dadurch gekennzeichnet, daß der Vorschub des Hauptschlittens (7) durch eine den Abstand zwischen dem Satellitenschlitten (6) und dem Hauptschlitten (7) aufnehmende Abstandsmeßvorrichtung (22) steuerbar ist.

10. Trennvorrichtung nach Anspruch 9, dadurch gekennzeichnet, daß der Satellitenschlitten (6) in seiner Ausgangsstellung gegen einen Positionierstift (11) anliegt, dessen axiale Hubbewegung der Eintauchtiefe des zu trennenden Rohres (2) in einen Meßkopf (10) entspricht, der in einem der gewünschten Abtrennlänge zugeordneten Abstand vom Positionierstift (11) auf einem verstellbaren Meßschlitten (9) angeordnet ist.

**Claims**

1. A parting device for tubes (2) which are being pushed forward in a pilgrim step and rotated, having a tube clamping mechanism as well as a mechanism which is able to travel axially and is controlled by the motion of the tube clamping mechanism and which carries a parting-tool, characterized in that the tube clamping mechanism (6) exhibits a clamping-part (19, 33, 40) which by the edge (32, 34) of it can be forced into the tube (2) and which is arranged opposite to and in alignment with the parting-member (18) of the parting-tool, so that the track (36) of the clamping-part (19, 33, 40) can be cut out round the circumference of the tube (2) by the parting-member (18).

2. A parting device as in Claim 1, characterized in that the clamping-part (19, 33, 40) and the parting-member (18) are able of shift radially.

3. A parting device as in Claim 1 or 2, characterized in that the clamping-part is a rotating clamping roller (19) having a cutting edge (32) formed round its circumference.

4. A parting device as in Claim 1 or 2, characterized in that the clamping-part is a clamping-piece (33) having a concave cutting edge (34) pointing towards the tube (2).

5. A parting device as in Claim 1 or 2, characterized in that the clamping-part and the parting-member are circular knives (40) arranged on the radially adjustable cheeks (46) of a headstock (43) which is able to travel axially.

6. A parting device as in Claim 5, characterized in that the circular knives (40) are arranged to be able to shift axially against springs with respect to the cheeks (46).

7. A parting device as in Claim 6, characterized in that the deviation in the position of the circular knives (40) from their positions of rest axially can be established by means of a distance measuring device by which the axial feed of the headstock (43) may be controlled.

8. A parting device as in one of the Claims 1 to 4, characterized in that the tube clamping mechanism (19, 33) and the parting-member (18) are arranged on a satellite carriage (6) which is supported axially against springs with respect to a main carriage (7) which carries the motor (15) of the parting device.

9. A parting device as in Claim 8, characterized in that the feed of the main carriage (7) may be controlled by a distance measuring device which picks up the distance between the satellite carriage (6) and the main carriage (7).

10. A parting device as in Claim 9, characterized in that the satellite carriage (6) in its starting position rests against a positioning-pin (11) the axial stroke of which corresponds with the depth of immersion of the tube (2) which is to be parted, in a measuring head (10) which is arranged on an adjustable measuring carriage (9) at a distance from the positioning pin (11), which is associated with the length which it is desired to part off.

## Revendications

1. Dispositif de séparation pour tubes (2) entraînés et enroulés à pas de pélerin avec un dispositif de collage ainsi qu'un dispositif portant un outil de séparation, mobile axialement et entraîné par le déplacement du dispositif de collage, caractérisé en ce que le dispositif de collage du tube (6) comporte un organe de collage (19, 33, 40) dont le bord (32, 34) imprime une empreinte dans le tube (2), et est disposé à l'opposé de l'élément de séparation (18) et aligné avec lui, de manière que l'empreinte (36), dudit organe de collage (19, 33, 40) tout au long de la périphérie du tube (2) soit découpable par l'élément de séparation (18).

2. Dispositif selon la revendication 1, caractérisé en ce que l'organe de collage (19, 33, 40) et l'élément de séparation (18) sont déplaçables radialement.

3. Dispositif selon l'une des revendications 1 et 2, caractérisé en ce que l'organe de collage consiste en un galet de collage rotatif (19) comportant un tranchant (32) pratiqué tout le long de sa périphérie.

4. Dispositif selon l'une des revendications 1 et 2, caractérisé en ce que l'organe de collage consiste en une pièce de collage présentant un tranchant (34) concave vis à vis du tube (2).

5. Dispositif selon l'une des revendications 1 et 2, caractérisé en ce que l'organe de collage et l'élément de séparation consistent en des couteaux circulaires (40) disposés sur les mâchoires réglables radialement (46) d'un mandrin déplaçable axialement (43).

6. Dispositif selon la revendication 5, caractérisé en ce que les couteaux circulaires (40) sont montés déplaçables axialement en opposition à des ressorts par rapport aux mâchoires (46).

7. Dispositif selon la revendication 6, caractérisé en ce que l'écart entre la position des couteaux circulaires (40) et leurs positions axiales de repos est réglable à l'aide d'un dispositif de mesure d'écartement en fonction de l'avance axiale gouvernable des machoires (43).

8. Dispositif selon l'une quelconque des revendications 1 à 4, caractérisé en ce que le dispositif de collage du tube (19, 33) et l'élément de séparation (18) sont montés sur un satellite de séparation (6) repoussé axialement par un moteur (15) en opposition à des ressorts, contre le chariot principal (7) portant le dispositif de séparation.

9. Dispositif selon la revendication 8, caractérisé en ce que l'avance du chariot pricipal (7) est gouvernable par un dispositif de mesure de distance captant la distance entre le chariot satellite (6) et le chariot principal (7).

10. Dispositif selon la revendication 9, caractérisé en ce que le chariot satellite (6) est situé dans sa position de sortie contre une butée de positionnement (11) dont la course de déplacement axial correspond à la profondeur de pénétration du tube à séparer dans und tête de mesure (10), laquelle est disposée sur un chariot de mesure réglable, à une distance de la butée de positionnement correspondant à la longueur de séparation désirée.

Fig. 1

Fig. 2

Fig. 3

**Fig. 4**

Fig. 5

Fig. 6     Fig. 7     Fig. 8     Fig. 9

Fig. 10

0 071 628